# EUROPEAN PATENT APPLICATION

(11) **EP 3 846 548 A1**
(43) Date of publication of application: **07.07.2021**
(21) Application number: 19853771.4
(22) Date of filing: 19.07.2019
(51) Int. Cl.: H04W 52/02

(54) **METHOD AND DEVICE FOR CONTROLLING AND INDICATING DISCONTINUOUS RECEPTION OF UE, STORAGE MEDIUM, TERMINAL AND BASE STATION**

(30) Priority: 31.08.2018 CN 201811009517
(71) Applicant: Spreadtrum Communications (Shanghai) Co., Ltd., Shanghai 201203 (CN)
(72) Inventor: GU, Xiangxin, Zhangjiang Shanghai 201203 (CN)
(74) Representative: Nordmeyer, Philipp Werner
(86) International application number: PCT/CN2019/096788
(87) International publication number: WO 2020/042825

(57) **Abstract**

A method and a device for controlling and indicating discontinuous reception of UE, a storage medium, a terminal and a base station. Said control method comprises: determining an expected shortest duration granted by an uplink in response to a scheduling request (SR) sent by an MAC entity; and allocating an SR response round trip time timer for the SR, the timing time of the SR response round trip time timer being equal to the shortest duration, and attempting to exit the active state during running of the SR response round trip time timer. The technical solution provided by the present invention is able to reduce power consumption of a terminal.

## Description

### CROSS-REFERENCE TO RELATED APPLICATIONS

This application claims the benefit of priority to Chinese Patent Application No. 201811009517.1, filed on August 31, 2018, and entitled "METHOD AND DEVICE FOR CONTROLLING AND INDICATING DISCONTINUOUS RECEPTION OF UE, STORAGE MEDIUM, TERMINAL AND BASE STATION", the entire disclosure of which is incorporated herein by reference.

### TECHNICAL FIELD

The present disclosure generally relates to wireless communication technology field, and more particularly, to a method and device for controlling discontinuous reception of a user equipment (UE), a method and device for indicating discontinuous reception of a UE, a storage medium, a terminal and a base station.

### BACKGROUND

The 3rd Generation Partnership Project (3GPP) is studying the Non Terrestrial Network (NTN) in the Fifth-Generation mobile communications (5G) New Radio (NR) system. The research scope of 5G NTN communication mainly includes: Spaceborne vehicle Geostationary Earth Oribit Satellites (GEO), Medium Earth Oribiting Satellites (MEO), Low Earth Oribit Statellites (LEO) and airborne vehicle High Altitude Platforms (HAPS). A main characteristic of NTN communication is that its Round Trip Time (RTT) is relatively long, which generally includes a few milliseconds (ms for short) to hundreds of milliseconds. Table 1 shows one-way delays of different NTN communication deployment scenarios. A RTT is twice of a one-way delay. In addition, Table 1 also shows relevant parameters of terrestrial network cellular communication (with a radius of 10 kilometers (km for short)).

**Table 1**

| | deployment -D1 | deployme nt -D2 | deployment -D3 | deployment -D4 | deployme nt -D5 | cellular (radius of 10 km) |
|---|---|---|---|---|---|---|
| Platfor m track altitude | GEO located at 35786 km | GEO located at 35786 km | Non GEO located at less sthan 600 km | Non GEO located at less sthan 600 km | airborne vehicle located above 20 km | |
| frequen cy band | Ka frequency band | S frequency band | S frequency band | Ka frequency band | S frequency band (lower than 6 GHz) | S frequency band |
| Maxim um one-wa y delay (ms) | Curve (Bent -pipe) : 272.37 Spaceboren gNB: 135.28 | 272.37 | 14.204 | 14.204 | 1.526 | 0.03333 |
| Maxim um delay differen ce (ms) | 16(Satellite covers from edge to center point) | 16(Satellit e covers from edge to center point) | 4.44(Satelli te covers from edge to center point) | 4.44(Satelli te covers from edge to center point) | 0.697(Sat ellite covers from edge to center | 0.00333(Cell center to edge) equals to the maximum |
| | | | | | point) | delay |

At present, Discontinuous Reception (DRX) is mainly designed for the terrestrial network with a relatively short RTT time. If the DRX mechanism is directly applied to NTN communication with a long RTT time, it would be difficult to take advantage of power saving characteristic of the DRX mechanism.

Therefore, it is necessary to further study the DRX mechanism in NTN communication.

### SUMMARY

Embodiments of the present disclosure provide a solution on how to take advantage of DRX in NTN communication, so that a terminal may reduce power consumption in discontinuous reception mode.

In an embodiment of the present disclosure, a method for controlling discontinuous reception (DRX) of a user equipment (UE) is provided, including: determining a shortest duration from a media access control (MAC) entity sending a scheduling request (SR) to expecting an uplink grant (UP grant) in response to the SR; and allocating an sr-Response-Round Trip Time-Timer (sr-Response-RTT-Timer) for the SR, wherein a timing of the sr-Response-RTT-Timer is equal to the shortest duration, and the UE attempts to exit an active state while the sr-Response-RTT-Timer is running.

Optionally, the method further includes: if the UE is configured with DRX and the SR is sent through a Physical Uplink Control Channel (PUCCH), starting the sr-Response-RTT-Timer of the SR when sending the SR through the PUCCH.

Optionally, starting the sr-Response-RTT-Timer of the SR includes: configuring the MAC entity to start the sr-Response-RTT-Timer of the SR in a first symbol after the UE transmits the SR through the PUCCH.

Optionally, before allocating the sr-Response-RTT-Timer for the SR, the method further includes: receiving a DRX configuration information, wherein the DRX configuration information includes a configuration information of the sr-Response-RTT-Timer of the SR.

Optionally, receiving the DRX configuration information sent by the network includes: receiving the DRX configuration information sent by the network through a Radio Resource Control (RRC) signaling.

Optionally, when the MAC entity sends the SR through the PUCCH, active periods of a DRX cycle at least includes: a period while the sr-Response-RTT-Timer of the SR expires and the SR is pending.

Optionally, attempting to exit the active state while the sr-Response-RTT-Timer is running means that the UE exits the active state while the sr-Response-RTT-Timer is running and no other conditions that keep the UE in the active state are met.

In an embodiment of the present disclosure, a method for indicating discontinuous reception of a UE is provided, including: determining a DRX configuration information, wherein the DRX configuration information includes a configuration information of an sr-Response-Round Trip Time-Timer (sr-Response-RTT-Timer) corresponding to a scheduling request (SR), and a timing of the sr-Response-RTT-Timer is equal to a shortest duration for a media access control (MAC) entity of the UE expecting an uplink grant (UP grant) in response to the SR after the SR is sent; and sending the DRX configuration information to the UE, so that the UE allocates the sr-Response-RTT-Timer for the SR according to the DRX configuration information and attempts to exit an active state while the sr-Response-RTT-Timer is running.

Optionally, sending the DRX configuration information to the UE includes: sending the DRX configuration information to the UE through a Radio Resource Control (RRC) signaling.

Optionally, attempting to exit the active state while the sr-Response-RTT-Timer is running means that the UE exits the active state while the sr-Response-RTT-Timer is running and no other conditions that keep the UE in the active state are met.

In an embodiment of the present disclosure, a device for controlling discontinuous reception of a UE is provided, including: a determining module, adapted to determine a shortest duration from a media access control (MAC) entity sending a SR to expecting an uplink grant (UP grant) in response to the SR; and an allocating module, adapted to allocate an sr-Response-Round Trip Time-Timer (sr-Response-RTT-Timer) for the SR, wherein a timing of the sr-Response-RTT-Timer is equal to the shortest duration, and the UE attempts to exit an active state while the sr-Response-RTT-Timer is running.

In an embodiment of the present disclosure, a device for indicating discontinuous reception of a UE is provided, including: a determining module, adapted to determine a DRX configuration information, wherein the DRX configuration information includes a configuration information of an sr-Response-Round Trip Time-Timer (sr-Response-RTT-Timer), and a timing of the sr-Response-RTT-Timer is equal to a shortest duration for a media access control (MAC) entity of a UE expecting an uplink grant (UP grant) in response to an SR; and a sending module, adapted to send the DRX configuration information to the UE, so that the UE allocates the sr-Response-RTT-Timer for the SR according to the DRX configuration information and attempts to exit an active state while the sr-Response-RTT-Timer is running.

In an embodiment of the present disclosure, a storage medium having computer instructions stored therein is provided, wherein once the computer instructions are executed, the above method for controlling discontinuous reception of a user equipment or the above method for indicating discontinuous reception of a user equipment is performed.

In an embodiment of the present disclosure, a terminal including a memory and a processor is provided, wherein the memory has computer instructions stored therein, and when the processor executes the computer instructions, the above method for controlling discontinuous reception of a user equipment is performed.

In an embodiment of the present disclosure, a base station including a memory and a processor is provided, wherein the memory has computer instructions stored therein, and when the processor executes the computer instructions, the above method for indicating discontinuous reception of a user equipment is performed.

Embodiments of the present disclosure may provide following advantages.

In embodiments of the present disclosure, the method for controlling discontinuous reception of a user equipment includes: determining a shortest duration from a MAC entity sending a SR to expecting an UP grant in response to the SR; and allocating an sr-Response-RTT-Timer for the SR, wherein a timing of the sr-Response-RTT-Timer is equal to the shortest duration, and the UE attempts to exit an active state while the sr-Response-RTT-Timer is running. According to the embodiments, the UE in the DRX mode configured with the sr-Response-RTT-Timer can effectively conform to the NTN communication characteristics (for example, the RTT is generally a few milliseconds to hundreds of milliseconds), which allows the UE to attempt to exit the active state during the operation of the sr-Response-RTT-Timer, thereby effectively reducing power consumption of the terminal and taking advantage of the power saving characteristic of DRX.

Further, a DRX configuration information sent by a network is received, where the DRX configuration information includes a configuration information of the sr-Response-RTT-Timer. According to the embodiments, the network configures the sr-Response-RTT-Timer for the UE, so that the UE can attempt to exit the active state during the operation of the sr-Response-RTT-Timer, thereby effectively reducing power consumption of the terminal.

### BRIEF DESCRIPTION OF THE DRAWINGS

Figure 1 is a schematic diagram of a timer running during a data transmission process in DRX in prior art;
Figure 2 schematically illustrates a flow chart of a method for controlling discontinuous reception of a UE according to an embodiment;
Figure 3 schematically illustrates a flow chart of a method for indicating discontinuous reception of a UE according to an embodiment;
Figure 4 schematically illustrates a structural diagram of a device for controlling discontinuous reception of a UE according to an embodiment;
Figure 5 schematically illustrates a structural diagram of a device for indicating discontinuous reception of a UE according to an embodiment; and
Figure 6 is a schematic diagram of signaling interaction in a typical application scenario according to an embodiment.

### DETAILED DESCRIPTION

Those skilled in the art can understand that, as described in background, if DRX is directly applied in NTN communication, it is difficult to take advantage of power saving characteristic of DRX.

Inventors of the present disclosure found that, in 5G NR communication, a network may configure DRX mode for a User Equipment (UE) in a connected state, and the UE in DRX mode does not need to continuously receive a Physical Downlink Control Channel (PDCCH).

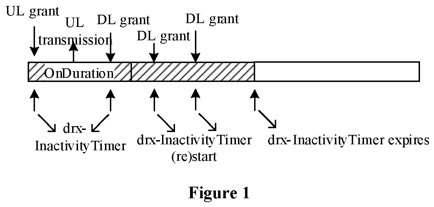

Specifically, the UE, which is in the connected state and in DRX mode, has following parameters and characteristics.
(1) Drx-onDuration Timer: from a start slot of a DRX cycle, a duration that the UE is kept in an active state, wherein during a running period of the drx-onDurationTimer, the UE is in an active state and shall monitor the PDCCH.
   Specifically, different UEs have different onDurations. A drx-StartOffset may be used to indicate a first subframe of a DRX cycle and slots within the first subframe.
(2) Drx-InactivityTimer: a duration after the PDCCH monitoring time, wherein the PDCCH is used to instruct a Media Access Control (MAC) entity to perform a new uplink (UL) transmission or downlink (DL) transmission. The UE will start or restart the drx-InactivityTimer every time it receives a Downlink Control Indicator (DCI) of a PDCCH indicating UL/DL transmission. During a running of the drx-InactivityTimer, the UE continuously monitors the PDCCH.
   As shown in Figure 1, during an OnDuration period of a DRX cycle, the UE remains in the active state; and each time it receives a DCI indicating UL/DL transmission, the UE starts or restarts the drx-InactivityTimer. During a running of the drx-InactivityTimer, the UE continues to remain in the active state.
(3)DL discontinuous reception Hybrid Automatic Repeat reQuest (HARQ) RTT timer (drx-HARQ-RTT-TimerDL): a minimum duration before a DL assignment for HARQ retransmission is expected by the MAC entity for each DL HARQ process. The UE starts the drx-HARQ-RTT-TimerDL after receiving a DL data and sending the Acknowledgement (ACK) for the DL data on a Physical Uplink Control Channel (PUCCH). Since the base station needs a processing time to process data and a transmission time to transmit data, the network will not retransmit the DL data or transmit another DL data for the UE, while the drx-HARQ-RTT-TimerDL is in the active state.
(4)UL discontinuous reception HARQ RTT timer (drx-HARQ-RTT-TimerUL): a maximum duration until a grant for UL retransmission is received for each UL HARQ process. The UE starts the drx-HARQ-RTT-TimerUL after sending an UL data. Since the base station needs a processing time to process data and a transmission time to transmit data, the base station will not perform HARQ feedback for the UL data while the drx-HARQ-RTT-Timer UL is in the active state.
(5) DL discontinuous reception retransmission timer (drx-RetransmissionTimerDL): a maximum duration until a DL retransmission is received for each DL HARQ process. The drx-RetransmissionTimerDL is started after the drx-HARQ-RTT-TimerDL expires. While the drx-RetransmissionTimerDL is active, the UE remains in the active state, so as to receive data blocks that are retransmitted by the base station may or newly transmitted to the UE.
(6) UL discontinuous reception retransmission timer (drx-RetransmissionTimerUL): a maximum duration until a grant for UL retransmission is received for each UL HARQ process. The drx-RetransmissionTimerUL is started after the drx-HARQ-RTT-TimerUL expires. While the drx-RetransmissionTimer UL is active, the UE remains in the active state, so as to receive a HARQ feedback corresponding to an UL data block that the base station may send to the UE and allocate uplink data transmission resources.

Further, when the DRX cycle is configured, the periods that the UE is in the active state includes: periods when the drx-onDurationTimer or the drx-InactivityTimer or the drx-RetransmissionTimerDL or the drx-RetransmissionTimerUL or the ra-ContentionResolutionTimer is running; or a period that a Scheduling Request(SR) is sent by the UE on the PUCCH and is pending, wherein the SR is pending means that the SR has been triggered but has not been canceled (when a Buffer State Report (BSR) corresponding to the SR is sent, the SR may be cancelled); or, a period that the MAC entity of the UE has successfully received a Random Access Response (RAR) responding to a Random Access Preamble that was not selected by the UE, but did not receive a PDCCH indicating a new transmission addressed to the a Cell- Radio Network Temporary Identifier (C-RNTI) of the MAC entity.

Under normal circumstances, using the DRX mode for data transmission and reception may balance the power consumption and response speed of a connected UE. When a frequency of sending and receiving data decreases, the connected UE will generally be configured to enter the DRX mode.

In the prior art, the DRX mechanism is generally designed for the terrestrial network. Because air propagation delay of a signal is very short, which is only a few microseconds to tens of microseconds, the terrestrial network RTT is relatively short. The terrestrial network communication delay mainly comes from data processing delay, which is generally a few milliseconds.

However, NTN communication has a longer RTT, and air propagation delay of a signal may reach tens of milliseconds or even hundreds of milliseconds. If the various timers and parameters in the current DRX mechanism are directly applied to the NTN communication, it may cause the following problems: since the RTT of the NTN communication is as long as several milliseconds or even hundreds of milliseconds. It will take a while to receive an UL grant allocated by the base station after sending the SR. Even if the UE does not have other services to maintain during this period, the UE needs to remain in the active state, resulting in power consumption.

In embodiments of the present disclosure, a method for controlling discontinuous reception of a user equipment (UE) is provided. The method includes: determining a shortest duration from a media access control (MAC) entity sending a scheduling request (SR) to expecting an Uplink grant (UP grant) in response to the SR; and allocating an sr-Response-Round Trip Time-Timer (sr-Response-RTT-Timer) for the SR, wherein a timing of the sr-Response-RTT-Timer is equal to the shortest duration, and the UE attempts to exit an active state while the sr-Response-RTT-Timer is running. According to the embodiments of the present disclosure, if a UE in DRX mode is configured with an sr-Response-RTT-Timer, according to NTN communication characteristics (for example, the RTT is generally a few milliseconds to hundreds of milliseconds), the UE can be allowed to exit the active state while the sr-Response-RTT-Timer is running, thereby greatly saving terminal power consumption and effectively taking advantage of power saving of DRX mode.

In order to clarify the object, characteristic and advantages of embodiments of the present disclosure, embodiments of present disclosure will be described clearly in detail in conjunction with accompanying drawings.

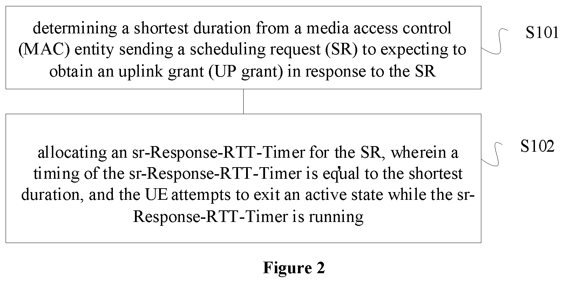

Figure 2 schematically illustrates a flow chart of a method for controlling discontinuous reception of a UE according to an embodiment. The method applies to a UE that is connected and in the DRX mode, which facilitates to effectively save power consumption of the UE.

In some embodiments, the method for controlling discontinuous reception of a UE includes S101 and S102.

In S101, a shortest duration from a MAC entity sending a SR to expecting an UP grant in response to the SR is determined.

In S102, an sr-Response-RTT-Timer for the SR is allocated, wherein a timing of the sr-Response-RTT-Timer is equal to the shortest duration, and the UE attempts to exit an active state while the sr-Response-RTT-Timer is running.

Specifically, a base station on a network side may send a DRX configuration information, where the DRX configuration information includes a configuration information for the sr-Response-RTT-Timer. According to the DRX configuration information, the UE may allocate a sr-Response-RTT-Timer for each SR.

In some embodiments, the base station may send the DRX configuration information through a Radio Resource Control (RRC) signaling, so as to control a DRX operation of the UE and allow the UE to configure each sr-Response-RTT-Timer and various parameters thereof.

In some embodiments, the base station may allow the UE to configure and allocate a sr-Response-RTT-Timer for each SR through the RRC signaling. A timing of the sr-Response-RTT-Timer is the shortest duration from the MAC entity sending the SR to expecting the UP grant in response to the SR.

Specifically, the base station may allow the MAC entity of the UE not to configure the SR through the RRC signaling, or to configure one or more SRs. Each SR includes PUCCH resources used for SR transmission that is across different Band Width Part (BWP) or cells.

In S101, when the UE has an uplink data to be transmitted, the UE may send an SR to the base station on the network side. Specifically, the UE may send the SR through the MAC entity. After that, the UE expects to obtain an UL grant for the SR response. The UE may calculate to determine a shortest duration from sending the SR to obtaining the UP grant in response to the SR.

In S102, the UE may allocate the sr-Response-RTT-Timer for the SR. After the UE sends the SR, the sr-Response-RTT-Timer of the SR may be configured to be started. During the operation of the sr-Response-RTT-Timer, if there is no other services that require the UE to remain in the active state, the UE may be allowed to exit the active state.

In some embodiments, if the network configures the DRX for the UE, and the SR sent by the UE is sent to the network through a PUCCH, then after the SR is sent, the sr-Response-RTT-Timer corresponding to the SR may be configured to be started. More specifically, the MAC entity may configure to start the SR's sr-Response-RTT-Timer in a first symbol after the UE transmits the SR through the PUCCH (for example, an Orthogonal Frequency Division Multiplexing (OFDM) symbol). During the operation of the sr-Response-RTT-Timer, the UE may try to exit the active state to reduce power consumption.

Specifically, during the operation of the sr-Response-RTT-Timer, the UE may try to exit the active state means that the UE exits the active state while the sr-Response-RTT-Timer is running and no other conditions that keep the UE in the active state are met. The other conditions for keeping the UE in the active state may refer to various conditions other than the running of the sr-Response-RTT-Timer that can control the UE to be in the active state. If there is any one condition that needs to keep the UE in the active state, the UE can stay in the active state according to the condition that needs to keep the UE in the active state; otherwise, if there isn't any condition that needs to keep the UE in the active state, during the operation of the sr-Response-RTT-Timer, the UE may try to exit the active state to reduce power consumption.

If the sr-Response-RTT-Timer expires and the corresponding SR is pending, the UE may enter the active state to expect to receive the PDCCH and obtain the UL grant. The SR is pending means that a buffer status that triggered the SR has not been reported to the network through the PUCCH.

Further, if the sr-Response-RTT-Timer expires and the SR is cancelled, the UE may exit the active state to reduce power consumption.

When the SR of the UE is configured with the sr-Response-RTT-Timer, active periods of the DRX cycle may include: periods when the drx-onDurationTimer, the drx-InactivityTimer, the drx-RetransmissionTimerDL, the drx-RetransmissionTimerUL or the ra-ContentionResolutionTimer is running; or when the MAC entity of the UE successfully receives a RAR used to respond to the random access preamble that is not selected by the UE, but does not receive the PDCCH indicating the new transmission by using C-RNTI; or, when the sr-Response-RTT-Timer expires and the SR is pending.

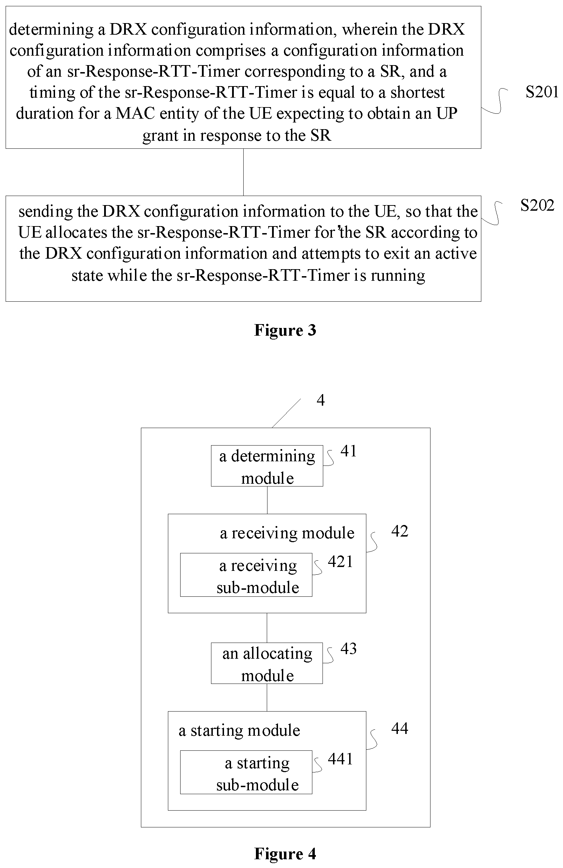

Figure 3 schematically illustrates a flow chart of a method for indicating discontinuous reception of a UE according to an embodiment. The method applies to a network side, such as a base station on the network side. The method includes S201 and S202.

In S201, a DRX configuration information is determined, wherein the DRX configuration information includes a configuration information of a sr-Response-RTT-Timer corresponding to a SR, and a timing of the sr-Response-RTT-Timer is equal to a shortest duration for a MAC entity of a UE expecting an UP grant in response to the SR after the SR is sent.

In S202, the DRX configuration information is sent to the UE, so that the UE may allocate the sr-Response-RTT-Timer for the SR according to the DRX configuration information and attempt to exit an active state while the sr-Response-RTT-Timer is running.

Specifically, in S201, the base station may configure the DRX configuration information for the UE, and the DRX configuration information may include the sr-Response-RTT-Timer. The timing of the sr-Response-RTT-Timer may be equal to the shortest duration that the MAC entity of the UE expects to obtain the UP grant in response to the SR after the SR is sent.

In S202, the base station may send the DRX configuration information to the UE, so that the UE can allocate the sr-Response-RTT-Timer for the SR configuration according to the DRX configuration information and attempt to exit the active state while the sr-Response-RTT-Timer is running.

In some embodiments, the base station may send the DRX configuration information to the UE through a RRC signaling.

Those skilled in the art can understand that, S201 to S202 may be regarded as implementation steps corresponding to S101 to S102 described in the embodiments in conjunction with Figure 2, and the two groups are complementary to each other in terms of specific implementation principles. Therefore, detailed description of the method for indicating discontinuous reception of a UE on the network side may refer to the related description of the embodiments in conjunction with Figure 2, which will not be repeated here.

In summary, according to the embodiments of the present disclosure, since the difference of RTTs between each UE and a corresponding satellite in NTN communication is relatively large, the network may configure the sr-Response-RTT-Timer for the UE, and the UE may attempt to exit the active state while the sr-Response-RTT-Timer is running, so as to reduce power consumption.

Figure 4 schematically illustrates a structural diagram of a device for controlling discontinuous reception of a UE according to an embodiment. The device for controlling discontinuous reception of a UE 4 (hereinafter referred to as the controlling device 4 for short) may be applied to the UE side, for example, be executed by a 5G UE. Those skilled in the art can understand that embodiments of the controlling device 4 may be used to implement the above-described method for controlling discontinuous reception of a UE shown in Figure 2.

In some embodiments, the controlling device 4 may includes: a determining module 41 and an allocating module 43.

In some embodiments, the determining module 41 is adapted to determine a shortest duration from a MAC entity sending a SR to expecting an UP grant in response to the SR; and the allocating module 43 is adapted to allocate an sr-Response-RTT-Timer for the SR, wherein a timing of the sr-Response-RTT-Timer is equal to the shortest duration, and the UE attempts to exit an active state while the sr-Response-RTT-Timer is running.

Specifically, during the operation of the sr-Response-RTT-Timer, the UE may try to exit the active state means that the UE exits the active state while the sr-Response-RTT-Timer is running and no other conditions that keep the UE in the active state are met.

In some embodiments, the controlling device 4 may further include: a starting module 44. Specifically, if the UE is configured with DRX and the SR is sent through a PUCCH, the starting module 44 is adapted to start the sr-Response-RTT-Timer for the SR when the PUCCH is used to send the scheduling request.

In some embodiments, the starting module 44 may include: a starting sub-module 441. Specifically, the starting sub-module is adapted to configure the MAC entity to start the sr-Response-RTT-Timer of the SR in a first symbol after the the SR is transmitted through the PUCCH.

In some embodiments, the controlling device 4 may further include: a receiving module 42. The receiving module 42 is adapted to receive a DRX configuration information sent by the network before allocating the sr-Response-RTT-Timer for the SR, where the DRX configuration information includes a configuration information of the sr-Response-RTT-Timer.

In some embodiments, the receiving module 42 may include: a receiving sub-module 421, which is adapted to receive the DRX configuration information sent by the network through a RRC signaling.

Further, when the MAC entity sends the SR through the PUCCH, active periods of a DRX cycle may at least include: a period while the sr-Response-RTT-Timer of the SR expires and the SR is pending.

Principles, detailed implementation and advantages of the controlling device 4 can be found in the above descriptions of the method as shown in Figure 2, and are not described here.

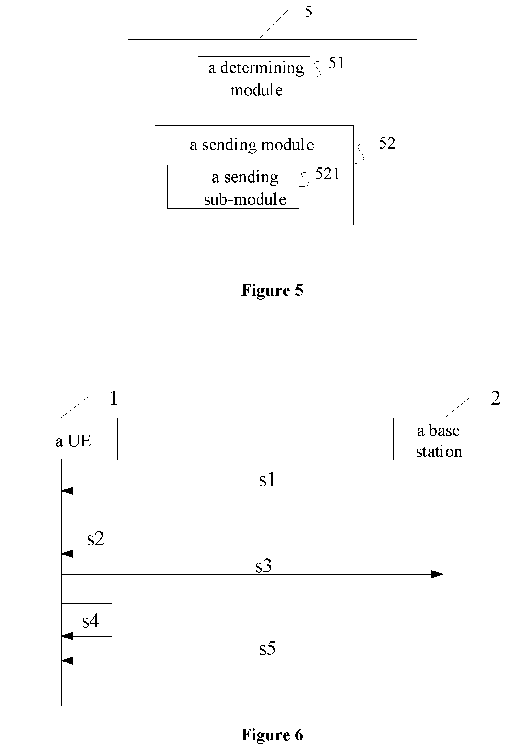

Figure 5 schematically illustrates a structural diagram of a device for indicating discontinuous reception of a UE according to an embodiment. The device for indicating discontinuous reception of a UE 5 (hereinafter referred to as the indicating device 5for short) may be applied to a network side, for example, be executed by a base station on the network side. Those skilled in the art can understand that embodiments of the indicating device 5 may be used to implement the above-described method for indicating discontinuous reception of a UE shown in Figure 3.

In some embodiments, the indicating device 5 may include a determining module 51 and a sending module 52.

In some embodiments, the determining module 51 is adapted to determine a DRX configuration information, wherein the DRX configuration information includes a configuration information of an sr-Response-RTT-Timer corresponding to an SR, and a timing of the sr-Response-RTT-Timer is equal to a shortest duration for a MAC entity of a UE expecting an UP grant in response to the SR after the SR is sent; and the sending module 52 is adapted to send the DRX configuration information to the UE, so that the UE allocates the sr-Response-RTT-Timer for the SR according to the DRX configuration information and attempts to exit an active state while the sr-Response-RTT-Timer is running.

Specifically, during the operation of the sr-Response-RTT-Timer, the UE may try to exit the active state means that the UE exits the active state while the sr-Response-RTT-Timer is running and no other conditions that keep the UE in the active state are met.

In some embodiments, the sending module 52 may include a sending sub-module 521, which is adapted to send the DRX configuration information to the UE through a RRC signaling.

Principles, detailed implementation and advantages of the indicating device 5 can be found in the above descriptions of the method as shown in Figure 3, and are not described here.

Signaling interactions between a user equipment and a network (for example, a NR base station) according to embodiments of the present disclosure will be further described in detail below in conjunction with a typical application scenario.

Figure 6 is a schematic diagram of signaling interactions in a typical application scenario according to an embodiment. Referring to Figure 6, after a UE 1 resides in a base station 2 in the network, the base station 2 may first perform an operation s1, in which a DRX configuration information is sent to the UE 1.

Secondly, the UE 1 performs an operation s2, in which after receiving the DRX configuration information, a MAC entity may allocate SR configurations, where each SR configuration is allocated a sr-Response-RTT-Timer.

Thirdly, the UE 1 performs an operation s3, in which an SR for an uplink data to be transmitted is generated and the SR is sent to the base station 2. Accordingly, the UE 1 starts the sr-Response-RTT-Timer, and while the sr-Response -During RTT-Timer is running, the UE 1 may try to exit the active state.

Thereafter, when the sr-Response-RTT-Timer expires and the SR is pending, the UE 1 may perform an operation s4, in which the UE 1 enters the active state and expects to receive the UL grant in response to the SR.

Further, the base station 2 may perform an operation s5, in which the base station 2 sends a UL grant to the UE 1, so that the UE 1 can send the uplink data to be transmitted.

Principles, detailed implementation and advantages of the UE 1 and the base station 2 in the application scenario shown in Figure 6 can be found in the above descriptions of the methods as shown in Figures 2 and 3, and are not described here.

In an embodiment of the present disclosure, a storage medium having computer instructions stored therein is provided, wherein once the computer instructions are executed, the above methods for controlling and indicating discontinuous reception of a UE as shown in Figures 2 and 3 are performed. The storage medium may be a computer readable storage medium, for example, a non-volatile or non-transitory memory. The computer-readable storage medium may include a Read Only Memory (ROM), a Random Access Memory (RAM), a magnetic disk, an optical disk or the like.

In an embodiment of the present disclosure, a terminal including a memory and a processor is provided, wherein the memory has computer instructions stored therein, and when the processor executes the computer instructions, the above method for controlling discontinuous reception of a UE as shown in Figure 2 is performed. Optionally, the terminal may be a user equipment, for example, a NR UE.

In an embodiment of the present disclosure, a base station including a memory and a processor is provided, wherein the memory has computer instructions stored therein, and when the processor executes the computer instructions, the above method for indicating discontinuous reception of a UE as shown in Figure 3 is performed. Optionally, the base station may be a satellite base station, for example, an NR base station installed on a satellite.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A method for controlling discontinuous reception (DRX) of a user equipment (UE), comprising:
determining a shortest duration from a media access control (MAC) entity sending a scheduling request (SR) to expecting an uplink grant (UP grant) in response to the SR; and
allocating an sr-Response-Round Trip Time-Timer (sr-Response-RTT-Timer) for the SR, wherein a timing of the sr-Response-RTT-Timer is equal to the shortest duration, and the UE attempts to exit an active state while the sr-Response-RTT-Timer is running.

2. The method according to claim 1, further comprising:
if the UE is configured with DRX and the SR is sent through a Physical Uplink Control Channel (PUCCH), starting the sr-Response-RTT-Timer of the SR when sending the SR through the PUCCH.

3. The method according to claim 2, wherein starting the sr-Response-RTT-Timer of the SR comprises:
configuring the MAC entity to start the sr-Response-RTT-Timer of the SR in a first symbol after the UE transmits the SR through the PUCCH.

4. The method according to claim 1, wherein before allocating the sr-Response-RTT-Timer for the SR, the method further comprises:
receiving a DRX configuration information, wherein the DRX configuration information comprises a configuration information of the sr-Response-RTT-Timer of the SR.

5. The method according to claim 4, wherein receiving the DRX configuration information sent by the network comprises:
receiving the DRX configuration information sent by the network through a Radio Resource Control (RRC) signaling.

6. The method according to any one of claims 1 to 5, wherein when the MAC entity sends the SR through the PUCCH, active periods of a DRX cycle at least comprises:
a period during which the sr-Response-RTT-Timer of the SR expires and the SR is pending.

7. The method according to any one of claims 1 to 5, wherein attempting to exit the active state while the sr-Response-RTT-Timer is running means that the UE exits the active state while the sr-Response-RTT-Timer is running and no other conditions that keep the UE in the active state are met.

8. A method for indicating discontinuous reception (DRX) of a user equipment (UE), comprising:
determining a DRX configuration information, wherein the DRX configuration information comprises a configuration information of an sr-Response-Round Trip Time-Timer (sr-Response-RTT-Timer) corresponding to a scheduling request (SR), and a timing of the sr-Response-RTT-Timer is equal to a shortest duration for a media access control (MAC) entity of the UE expecting an uplink grant (UP grant) in response to the SR after the SR is sent; and
sending the DRX configuration information to the UE, so that the UE allocates the sr-Response-RTT-Timer for the SR according to the DRX configuration information and attempts to exit an active state while the sr-Response-RTT-Timer is running.

9. The method according to claim 8, wherein sending the DRX configuration information to the UE comprises:
sending the DRX configuration information to the UE through a Radio Resource Control (RRC) signaling.

10. The method according to claim 8 or 9, wherein attempting to exit the active state while the sr-Response-RTT-Timer is running means that the UE exits the active state while the sr-Response-RTT-Timer is running and no other conditions that keep the UE in the active state are met.

11. A device for controlling discontinuous reception (DRX) of a user equipment (UE), comprising:
a determining module, adapted to determine a shortest duration from a media access control (MAC) entity sending a SR to expecting an uplink grant (UP grant) in response to the SR; and
an allocating module, adapted to allocate an sr-Response-Round Trip Time-Timer (sr-Response-RTT-Timer) for the SR, wherein a timing of the sr-Response-RTT-Timer is equal to the shortest duration, and the UE attempts to exit an active state while the sr-Response-RTT-Timer is running.

12. A device for indicating discontinuous reception (DRX) of a user equipment (UE), comprising:
a determining module, adapted to determine a DRX configuration information, wherein the DRX configuration information includes a configuration information of an sr-Response-Round Trip Time-Timer (sr-Response-RTT-Timer), and a timing of the sr-Response-RTT-Timer is equal to a shortest duration for a media access control (MAC) entity of a UE expecting an uplink grant (UP grant) in response to an SR; and
a sending module, adapted to send the DRX configuration information to the UE, so that the UE allocates the sr-Response-RTT-Timer for the SR according to the DRX configuration information and attempts to exit an active state while the sr-Response-RTT-Timer is running.

13. A storage medium having computer instructions stored therein, wherein once the computer instructions are executed, the method for controlling discontinuous reception of a user equipment according to any one of claims 1 to 6 or the method for indicating discontinuous reception of a user equipment according to any one of claims 8 to 10 is performed.

14. A terminal having a memory and a processor is provided, wherein the memory has computer instructions stored therein, and when the processor executes the computer instructions, the method for controlling discontinuous reception of a user equipment according to any one of claims 1 to 6 is performed.

15. A base station having a memory and a processor is provided, wherein the memory has computer instructions stored therein, and when the processor executes the computer instructions, the method for indicating discontinuous reception of a user equipment according to any one of claims 8 to 10 is performed.
